# EUROPEAN PATENT APPLICATION

(11) **EP 1 403 358 A1**
(43) Date of publication of application: **31.03.2004**
(21) Application number: 02079010.1
(22) Date of filing: 27.09.2002
(51) Int. Cl.: C10G 27/12, C10G 67/12

(54) **Process and catalysts for deep desulphurization of fuels**

(71) Applicant: ENI S.p.A., 00144 Roma (IT); EniTecnologie S.p.A., S. Donato Milanese (Milano) (IT)
(72) Inventor: Zanibelli, Laura, 26013 Crema (Cremona) (IT); Bellussi, Giuseppe, 29100 Piacenza (IT); Corma Canos, Avelino, 46020 Valencia (ES); Domine, Marcelo Eduardo, 46021 Valencia (ES); Gagliardi Maria Federica, 21053 Castellanza (IT)
(74) Representative: De Gregori, Antonella

(57) **Abstract**

The present invention concerns a process for oxidative desulphurization of hydrotreated hydrocarbon mixtures which boil within the range of 180° to 360°C, containing less than 350 ppm of sulphur as thiopenic compounds, said process comprising the steps of a) putting these mixtures in contact, in the presence of an organic peroxide, with a catalytic composition comprising a completely amorphous micro and/or mesoporous mixed oxide containing an oxide matrix selected from silica, alumina, ceria, magnesia and mixtures of thereof, wherein one or more oxidative metal oxides selected from transition metal oxides and group IVA metal oxides are uniformly dispersed, and b) separing the obtained corresponding sulphur oxygenated products from the hydrocarbon mixture.

## Description

The present invention relates to a process for the deep oxidative desulphurisation of hydrotreated hydrocarbon mixtures boiling in the diesel range containing sulphur impurities, effected in the presence of an organic oxidant and a catalytic composition containing a completely amorphous micro and/or mesoporous mixed oxide comprising a matrix selected from silica, alumina, ceria, magnesia and mixtures of thereof, wherein one or more metal oxides selected from transition metal oxides and Group IVA metal oxides are uniformly dispersed. Optionally boron and/or gallium oxides can be contained in the catalytic composition.

The process is carried in absence of added solvent. The oxigenated sulphur products obtained have higher polarity and/or molecular weight and they could be easily separated from liquid fuels, for example by distillation or by solvent extraction methods or by selective adsorption.

In the hydrotreated hydrocarbon mixtures boiling in the diesel range (180-360°C), and in particular in LCO ( light cycle oil ) range, preferably containing less than 350 ppm S, the sulphur compounds are thiopenic compounds, in particular dibenzothiophene (DBT), alkyldibenzotiophene (alkylDBT), polyalkyldibenzotiophene (polyalkylDBT).

The hydrotreated hydrocarbons mixtures derives from a hydrotreating process, a well-known process whereby hydrogen is contacted with a hydrocarbon stream and catalyst to effect a number of desiderable reactions, including the conversion of sulphur compounds to hydrogen sulphide. The reaction product is then separated into a gaseous hydrotreated effluent stream and thus effectively removed from the hydrocarbon product. Hydrotreating can readily reduce the level of several common classes of sulphur compound such as sulphides, disulfides, and thiols, present in refinery products. Unfortunately, however, hydrotreating often fails to provide a treated product in compliance with the strict sulphur level targets demanded currently.

The so-obtained hydrotreated hydrocarbon mixtures , and in particular LCO cut, containing said sulphur compounds most refractory to hydrogenation process, are blended in diesel fraction. The new proposed specifics on S amount in diesel is becoming more and more stringent (Environment Council Dep. Proposal 13.12.01). The foreseen specifics are diesel with S < 10 ppm and diesel with S < 50 ppm by the 2005, while only diesel with S < 10 ppm by 2009. Such specifics anticipate the previous requirements (S < 50 ppm by the 2005 and S < 10 ppm by the 2010). The conventional processes to desulphurize fuels are based on catalytic hydrogenation, at relatively high pressure (30-80 bar) and temperature (270-330°C) : the new restriction requires higher H₂ consumption therefore higher H₂ production, H₂ recovery an purification, revamp of reactor to increase the catalyst volume while maintaining catalyst cycle life.

The necessity has therefore been felt for identifying a catalytic system which, combined with suitable non hydrogenation process, diminishes the sulphur in the hydrocarbons boiling in the range of the diesel, in mild condition.

The use of Ti-catalysts as selective oxidative catalysts in presence of suitable peroxides is known and microporous crystalline titanosilicates such as TS-1 and Ti-Beta can oxidise alkyl and aromatic sulphides with high level of conversion to sulfoxides and sulfones (US 4410501, Chem.Comm., 84(1992), Catal. Lett., 39, 153-156 (1996), J.Mol.Catal.A, 11, 325 (1996)). Besides, Ti-Beta and Ti-HMS can oxidise some thiophenic compounds to the corresponding sulfones using H₂O₂ as oxidant with the necessary presence of large amounts of acetonitrile as solvent (J.Catal., 198, 179 (2001), WO 0148119). Ti-HMS is a hexagonal ordered mesoporous structure characterized by an X ray powder pattern showing a single broad peak: reflection (100).

To apply this selective oxidation process to the sulphur removal in liquid hydrocarbon fuels, the two phases system may cause serious difficulties in term of additional step process for the separation of solvent / water phase. Other catalytic systems can be applied to sulphur compounds oxidation with inorganic or organic peroxides, such as ITQ-2 zeolite in the case of thiols in WO 0034181, or MCM-41 in the case of thioethers in US 5783167. The MCM-41 is a hexagonal ordered mesoporous structure characterized by an X-ray powder pattern showing a three peak (reflections (100), (110) and (200)), due to some "long-range" order. Ti-HMS and MCM-41 hysotherms are of Type IV without hysteresis loop; this can be attributed to the cylindrical pores, having the same size of pore mouth and pore body.

In the case of sulphoxidation of large organic sulphur compounds as polyalkylDBT in a complex matrix like a hydrocarbons cut boiling in the diesel range some structural restrictions take place, relating to the diffusion of molecules into catalyst pores.

We have now unexpectedly found that it is possible to desulphurize hydrotreated hydrocarbons boiling in the diesel range, at milder condition than those preferably used in the hydrogenation process and in unique organic phase, up to very low S level (< 10 ppm), by means of an organic peroxide and a completely amorphous micro and/or mesoporous catalyst comprising an oxide matrix wherein one or more oxidative metal oxides are uniformly dispersed.

EP 492697, US 5049536 and US 5625108 disclose completely amorphous micro-mesoporous metallo-silicates, called MSA , having a rather narrow distribution of the pore dimensions ( average diameter of between 20 and 40 Å, basic absence of pores with a diameter of more than 40 Å ), surface area > 500 m²/g, pore volume of 0.4-0.8 ml/g.

EP 691305 and EP 736323 also describe the possibility of preparing micro-mesoporous metallo-silicates, called ERS-8, characterized by a narrow distribution of the pore dimensions with an average diameter of <40 Å, a pore volume of between 0.3 and 1.3 ml/g a surface area of between 500 and 1200 m²/g. The MSA are completely amorphous, their XRD spectrum from powders does not have a crystalline structure and does not show any peak. The ERS-8 are completely amorphous, their XRD spectrum from powders does not have a crystalline structure, does not show any peak and has a widespread reflection at low angles , indicating a "short-range" order in the micro-mesoporous structure.

These materials of MSA or ERS-8 type consist of a silica matrix in which one or more metal oxides are possibly uniformly dispersed , wherein the metals are selected from transition metals or metals belonging to groups IIIA, IVA or VA of the Periodic Table.

EP 812804 describes an improved preparative method of the above metallo-silicate compounds comprising the following steps:
a) preparing a mixture starting from a tetraalkylorthosilicate, a C₃-C₆ alkyl alcohol or dialcohol, a tetraalkylammonium hydroxide having the formula R1 (R2) ₃N-OH wherein R1 is a C₃-C₇ alkyl and R2 is a C1 or C₃-C₇ alkyl, optionally in the presence of one or more metal compounds , in which the molar ratios are within the following ranges :
   - alcohol/SiO₂ < or equal to 20;
   - R1(R2)₃N-OH/SiO₂ = 0.05-0.4;
   - H₂O/SiO₂ = 1-40
   - metal oxides/SiO₂ = 0-0.02
b) subjecting this mixture to hydrolysis and subsequent gelation at a temperature of between 20°C and a temperature close to the boiling point of the alcohol or mixture of alcohols present;
c) subjecting the gel obtained to drying and calcination.

We have now unexpectedly found and that is a first object of the present invention a process for oxidative desulphurization of hydrotreated hydrocarbon mixtures which boil within the range of 180° to 360°C, containing less than 350 ppm of sulphur as thiopenic compounds, which comprises putting these mixtures in contact, in the presence of an organic peroxide, with a catalytic composition comprising a completely amorphous micro and/or mesoporous mixed oxide which contains an oxide matrix selected from silica, alumina, ceria, magnesia and mixtures of thereof, wherein one or more oxidative metal oxides selected from transition metal oxides and group IVA metal oxides are uniformly dispersed, and separing the obtained corresponding sulphur oxygenated products from the hydrocarbon mixture. The oxidative dispersed metal oxide can be selected from oxide of Ti, V, Zr, Sn and their mixtures. The catalytic composition can optionally contain also boron and/or gallium oxides.

The organic peroxide can be an alkyl- or an aryl-hydroperoxide, or a dialkyl- or diaryl-peroxide, wherein the alkyl or aryl groups can be the same or different, and preferably the organic peroxide is terbutyl hydroperoxide.

The completely amorphous mixed oxides useful in the process of the present invention are micro and/or mesoporous material, according to the terminology suggested by IUPAC Manual of Symbols and Terminology, Appendix 2, Part I Coll., Surface Chem. Pure Appl. Chem., (1972), Vol.31, pag. 578, in which micropores are defined as pores with a diameter of less then 20 Å and mesopores are defined as pores with a diameter of between 20 and 500 Å.

The molar ratio between the oxide matrix (YO) selected from silica, alumina, ceria, magnesia and mixtures of thereof, and the dispersed metal oxide (MO), preferably selected from the oxides of titanium, zirconium, vanadium, tin, is between 5/1 and 300/1, preferably between 10/1 and 200/1. When boron or/and gallium oxides are present the molar ratio between the oxide matrix and boron and/or gallium oxide is between 5/1 and 300/1.

In the catalytic compositions useful in the process of the present invention preferably the oxide matrix is selected from silica, alumina and mixture thereof, and the metal oxide is preferably selected from the oxides of titanium, zirconium, vanadium, tin, and more preferably is oxide of titanium.

Completely amorphous microporous mixed oxides useful in the process of the present invention can be of AMM type, described in S. Klein, J. A. Martens, R. Parton, K. Vercruysse, P. A. Jacobs, W.F. Maier; "Amorphous microporous mixed oxides as selective redox catalysts", Catalysis Letters 38 (1996) 209-214.

The completely amorphous mesoporous mixed oxides useful in the process of the present invention can be prepared according with EP 748652, wherein one or more compounds, soluble in alcohol environment, of transition metals and/or group IVA metals are used.

The completely amorphous micro-mesoporous mixed oxides useful in the process of the present invention are characterized by a surface area of more than 500 m²/g, a pore volume of between 0.3 and 1.3 ml/g, an average pore diameter of less than 40 Å. Their XRD spectrum from powders does not have a crystalline structure, does not show any peak, and optionally shows a widespread scattering at angular value not greater than 2θ = 5°, with CuKα radiation, while other scattering phenomena coherent for greater angular values are absent. In particular the completely amorphous micro-mesoporous mixed oxides, whose XRD spectrum from powders does not have a crystalline structure and does not show any peak, are called MSA type and the completely amorphous micro-mesoporous mixed oxides whose XRD spectrum from powders does not have a crystalline structure, does not show any peak, and shows a widespread scattering at angular value not greater than 2θ = 5°, with CuKα radiation, while other scattering phenomena coherent for greater angular values are absent, are called ERS-8 type.

The micro-mesoporous completely amorphous mixed oxide of MSA type, useful in the process of the present invention, containing a matrix of an oxide (YO) selected from silica, alumina, ceria, magnesia and mixtures of thereof, wherein one or more metal oxides (MO) selected from transition metal oxides and group IVA metal oxides, preferably selected from the oxides of titanium, zinc, vanadium and tin, are uniformly dispersed, can be prepared, besides the preparation described in EP 492697 and in EP 812804, also in the following way:
(a) subjecting to hydrolysis and gelification a solution of one or more soluble or hydrolizable compounds of Si, Al, Ce, Mg, or mixture thereof, in alcohol, with an aqueous solution of a hydroxide of tetra-alkylammonium having the formula (I):

R'₄N-OH

wherein R' represents a C₃-C₇ alkyl group and of one or more soluble or hydrolizable compounds of one or more transition metals or group IVA metal, preferably selected from Ti, V, Zr, Sn, the quantity of the constituents of the above solution being such as to respect the following molar ratios:
alcohol/YO = 5-20
R'₄N-OH/YO = 0.05-0.5;
H₂O/YO = 5-30
YO/MO ≥ 5
whereas the ratio H₂O/R'₄N⁺ varies according to the number of carbon atoms in the R' alkyl chain, in accordance with the values shown in table A below :

**Table A**

| R' | H₂O/R'₄N⁺ |
|---|---|
| Hexyl | > 133 |
| Pentyl | > 100 |
| Butyl | > 73 |
| Propyl | > 53 |

operating at a temperature between the room temperature and the boiling point, at atmospheric pressure, of the alcohol used and of any alcohol which develops as by-product of the above hydrolysis reaction, without the elimination or substantial elimination of said alcohols from the reaction environment, preferably at a temperature of between 20°C and 80°C;
(b) subjecting the gel obtained in step (a) to drying and calcinations.

The soluble or hydrolizable compounds of Si which can be used are tetra-alkyl orthosilicates selected from tetramethyl, tetraethyl, tetranormalpropyl, tetraisopropyl, tetranormalbutyl, tetrasecbutil, tetraterbutyl orthosilicate, and among these tetraethylorthosilicate is preferred. The soluble or hydrolizable compounds of Al which can be used are aluminium trinormalpropoxide, triisopropoxide, trinormalbutoxide, trisecbutoxide and triiterbutoxide. The soluble or hydrolizable compounds of one or more transition metals or group IVA metals, preferably selected from Ti, V, Zr, Sn, can be selected from the hydrosolubile or hydrolizable salts or acids of the metals themselves. Tetraethylorthotitanate is preferred. The alcohol can be selected among C2-C6 alchohol and preferably is ethanol.

When the catalytic composition also contain boron and/or gallium oxides, in the step (a) of the preparation one or more soluble or hydrolizable compounds of boron and/or gallium are added, in the molar ratio between the oxide matrix and boron and/or gallium oxide higher or equal to 5.

The micro-mesoporous amorphous mixed oxide of ERS-8 type, useful in the process of the present invention, containing a matrix of a oxide (YO) selected from silica, alumina, ceria, magnesia and mixtures of thereof, wherein one or more metal oxides (MO) selected from transition metal oxides and group IVA metal oxides, preferably selected from the oxides of titanium, zinc, vanadium and tin, are uniformly dispersed, can be prepared according with the above preparation wherein the ratios H₂O/R'₄N⁺ varies according to the number of carbon atoms in the R' alkyl chain , in accordance with the values shown in table B below :

**Table B**

| R' | H₂O/R'₄N⁺ |
|---|---|
| Hexyl | ≤ 133 |
| Pentyl | ≤ 100 |
| Butyl | ≤ 73 |
| Propyl | ≤ 53 |

A particularly preferred aspect of the invention is using completely amorphous micro-mesoporous mixed oxides of MSA type consisting of a silica matrix wherein one or more metal oxides are uniformly dispersed, these being selected from the oxides of titanium, zirconium, vanadium, tin.

Another particularly preferred aspect of the invention is using completely amorphous micro-mesoporous mixed oxides of MSA type consisting of a silica and alumina matrix wherein one or more metal oxides are uniformly dispersed, these being selected from the oxides of titanium, zirconium, vanadium, tin. They are new and a further object of the present invention.

A further particularly preferred aspect of the invention is using completely amorphous micro-mesoporous mixed oxides of ERS-8 type consisting of a matrix of silica or a matrix of silica and alumina, wherein one or more metal oxides are uniformly dispersed selected from oxides of titanium, zinc, vanadium and tin.

Said mixed oxides, excluding the mixed oxides containing a silica matrix wherein titanium oxide is uniformly dispersed, are a selection from the compositions described in EP 691305 and are new.

The completely amorphous micro-mesoporous mixed oxides used in the process of the present invention containing an oxide matrix selected from silica, alumina, ceria, magnesia and mixtures of thereof, wherein one or more metal oxides selected from oxides of Ti, V, Zr, Sn, are uniformly dispersed, excluding the mixed oxide of MSA type containing a silica matrix wherein one or more metal oxides are uniformly dispersed selected from the oxides of titanium, zirconium, vanadium, tin and excluding the mixed oxide of ERS-8 type containing a silica matrix wherein titanium oxide is uniformly dispersed, are new and are a further object of the present invention.

A further particularly preferred aspect of the invention is using all the above described catalytic composition in silylated form.

When the catalyst is silylated and is used in the process for desulphurizing of the present invention best results are obtained with lower catalyst amount than the same catalyst in not silylated form.

Therefore a particularly preferred aspect of the invention is a process for desulphurizing hydrocarbons boiling within the range of 180° to 360°C, containing less than 350 ppm of sulphur as thiopenic compounds, which comprises putting these mixtures in contact, in the presence of an organic peroxide, with a catalytic composition comprises a completely amorphous microporous and/or mesoporous mixed oxide containing a matrix selected from silica, alumina, ceria, magnesia and mixtures of thereof, wherein one or more metal oxides selected from the transition metal oxides and group IVA metal oxides, preferably oxides of Ti, V, Zr, Sn, are uniformly dispersed, whose surface has -O-Si(R)₃ groups, wherein R can be the same or different each other and are selected from C₁-C₄ alkyl, aryl, preferably phenyl, polyaryl groups, that can contain functional groups as acids, amines, thiols, sulfonics or trialkylamines.

The obtained sulphur oxygenated products are then separed from the hydrocarbon mixture.

The mixed oxides of the present invention have a molar ratio between the metal oxide matrix and the dispersed metal oxide between 5 and 300, and after silylation higher than 5 and less or equal to 400, computing the added Si as constituent of the matrix, expressed as SiO₂.

The silylated mixed oxides of the present invention can optionally contain gallium and/or boron oxides.

When a silylated catalyst is used in the process of the present invention, it can be prepared using the above described sol-gel procedure where in the step (b), after drying, the material is outgassed in vacuum and then a solution of the silylating agent in an organic solvent, as for instance toluene or dichloromethane, is added. The ratio of the silylating agent (SA) to the metal (M), selected from transition metal and group IVA metal, is in the range from 0.05 to 1.0 moles of SA to mole of metal M. As silylating agent one can use for example hexaalkyldisilazane or hexaaryl disilazane. The alkyl or aryl groups of the disilazane can be selected from C₁-C₄ alkyl, phenyl, and polyaryl groups, and they can contain functional groups as acids, amines, thiols, sulfonics or trialkylamines.

The resulting mixture is refluxed under inert atmosphere and then the silylated sample is filtered and washed, for example with toluene. The obtained product is dried.

The completely amorphous micro and/or mesoporous mixed oxides containing a matrix selected from silica, alumina, ceria, magnesia and mixtures of thereof, wherein one or more metal oxide selected from transition metal oxides and group IVA metal oxides, preferably selected from the oxides of Ti, V, Zr, Sn are uniformly dispersed, whose surface has -O-Si(R)₃ groups, wherein R can be the same or different each other, R being selected from alkyl, aryl and polyaryl groups that can contain functional groups as acids, amines, thiols, sulfonics or tetraalkylamonics, are new and are a further aspect of the present invention. They can optionally contain boron and/or gallium oxides. According to a preferred aspect of the present invention these catalytic composition are micro-mesoporous. They are characterized by a surface area of more than 300 m²/g, a pore volume of between 0.3 and 1.3 ml/g, an average pore diameter of less than 40 Å, and their XRD spectrum do not show a crystalline structure, but optionally a widespread "scattering" with angular values of not more than 2θ=5°.

The catalysts used in the process of the present invention can be used as such or, preferably, extruded according to the known techniques, i.e. using a binder, as pseudobohemite, and a peptizing agent, as acetic acid solution, added to the catalyst to produce an estrudable paste.

The oxidative desulphurization process of the present invention is carried out at a temperature ranging from 50 to 120°C, preferably at atmospheric pressure, in presence of an organic peroxide with a weight ratio in respect to S ranging from 2 to 15. The hydrotreated hydrocarbon mixtures which can be desulphurized according to the process of the present invention contain less than 350 ppm of sulphur. For example hydrotreated hydrocarbon mixtures boiling in the diesel range of 180-360 °C with a sulphur content less than 350 ppm, can be subjected to oxidative desulphurization.

The hydrotreating hydrocarbon mixture which is preferably subjected to oxidative desulphurization according to the process of the present invention consists of hydrocarbons boiling in the diesel range such as LCO.

The process of the present invention is carried in unique organic phase and in absence of added solvent.

The sulphur compounds contained in the hydrocarbon mixtures of the process of the present invention are thiophene compounds, in particular dibenzothiophene (DBT), alkyldibenzotiophene (alkylDBT), polyalkyldibenzotiophene (polyalkylDBT). At the end of the oxidative desulphurization process oxigenated sulphur products are obtained having higher polarity and/or molecular weight. They can be easily separated from the hydrocarbon mixtures, for example by distillation or by solvent extraction methods or by selective adsorption. The skilled person well knows how to carry out said methods. If it is done by solvent extraction, preferably the removal of sulphur oxigenated products from the treated hydrocarbon mixtures can be effected for example by extraction with methanol, acetonitrile , dioxane, methyl-terbutyl-ethere. Alternatively the sulphur oxigenated products can be removed by distillation.

In the following examples catalysts preparations are reported, and tests performed either on a model feed or on a LCO cut.

### EXAMPLE 1 (preparation of Ti-ERS-8)

1.34 g of Ti(OC₂H₅)₄ (TEOT) was dissolved at room temperature in 124.8 g of Si(OC2H5)4 (Dynasil-A, Nobel). The solution obtained was added to 143.8 g of tetrahexylammonium hydroxide (40 wt % THA-OH in aqueous solution - Fluka) and 220.8 g of EtOH (Molar ratio in reagent mixture: THA-OH/SiO2=0.26, H2O/SiO2=8, EtOH/SiO2 = 8 and SiO2/TiO2 = 102).

The monophasic clear solution was heated at 50°C under stirring. After 2 hours a viscose transparent gel. The gel was dried at 120 °C 6 hours and calcined 8 hours in air at 550 °C to eliminate the organic gelling agent. The obtained Ti-ERS-8 shows a SSA of 600 m²/g, with a pore volume of 0.31 ml/g , with a diameter of less then 40 Å. The XRD spectrum shows the presence of a widespread scattering in the angular region at 2θ of between 1° and 4°.

### EXAMPLE 2-4 (preparation of Ti-MSA)

Samples were prepared via sol-gel using Si(OC2H5)4 (Dynasil-A, Nobel), TEOT (Fluka), tetrapropylammonium hydroxide (TPAOH, Sachem), alcohol (EtOH). All preparations were performed at the same molar ratio: TPAOH/SiO2=0.09, H2O/SiO2=8, EtOH/SiO2=8.

The molar ratio SiO2/TiO2 was changed between 20 and 100.

The synthesis preparation is following described: three different amount of TEOT (see Table 1) were dissolved in a solution of 104.2 g Si(OC2H5)4 and 184 g EtOH. The obtained homogeneous solutions were added to 90 gr TPAOH aqueous solution (11.3 wt %). Monophasic clear solutions were obtained and, after 15-30 minutes under stirring at room temperature, transformed in homogeneous compact gels without separation of phases. Table 1 shows the gelling time related to the SiO₂/TiO₂ molar ratio.

After 16 hour ageing at room temperature, the gels were dried at 120°C for 7h.

In order to decompose and eliminate the gelling agent the dried gels were calcined 8h in air at 550 °C.

**Table 1**

| | TEOT (g) | Molar ratio SiO₂/TiO₂ | Gelling time (min) |
|---|---|---|---|
| EXAMPLE 2 | 6.00 | 20 | 28 |
| EXAMPLE 3 | 2.98 | 39 | 18 |
| EXAMPLE 4 | 1.16 | 100 | 15 |

The textural properties of calcined samples were determined by nitrogen isotherms at liquid N2 temperature, using a Micromeritics ASAP 2010 apparatus (static volumetric technique). Before determination of adsorption-desorption isotherms the samples (~ 0.2 g) were outgassed for 16 h at 350 °C under vacuum.

The specific surface area (SSA) was evaluated by 2-parameters linear BET plot in the range p/p° 0.01-0.2. The total pore volume (VT) was evaluated by Gurvitsch rule. Medium pore size (dDFT) and pore size distributions were calculated using DFT method for all materials.

Ti-MSA described in EXAMPLE 2-4 show the textural properties reported in the following Tab. 2:

**Table 2**

| | SSA (m²/g) | Vpore (ml/g) | D medium (DFT) nm |
|---|---|---|---|
| EXAMPLE 2 | 820 | 0.54 | 2.4 |
| EXAMPLE 3 | 820 | 0.56 | 2.5 |
| EXAMPLE 4 | 790 | 0.72 | 3.7 |

Ti-MSA described in EXAMPLE 2-4 show the UV-Vis profiles reported in figure 1.

Ultraviolet-Visible (UV-Vis) spectroscopic analysis of powdered samples was performed with a Perkin-Elmer Lambda 19 spectrophotometer, equipped with a reflectance sphere. The spectra were registered at 295 K with 1 nm resolution in 190-500 nm range, in Kubelka-Munk resolution (KM).

UV-Vis spectroscopy gives information about coordination of Ti atoms. The band in the range 190-210 nm is attributed to the charge transfer of Ti (Td) sites, while segregated TiO₂ (Oh) absorbs at 310-330 nm [M. Padovan, F. Genoni, G. Leofanti, G. Petrini, G. Trezza and A. Zecchina, in "Preparation of Catalyst V", G. Poncelet, P.A. Jacobs, P. Grange and B. Delmon Eds., (1991) 431]; absorptions at 238-330 nm are attributed to atomically dispersed Ti atoms in octahedral coordination with oxygen ligands [J. Weitkamp, S. Ernst, E. Roland and G.F. Thiele, Stud. Surf. Sci. Catal. 105 (1997) 763] or to Ti agglomerates (via oxygen-bridges) giving TiO₂ clusters of increasing sizes [J. Weitkamp, S. Ernst, E. Roland and G.F. Thiele, Stud. Surf. Sci. Catal. 105 (1997) 763].

### EXAMPLE 5 (silylated Ti-MSA)

In this example the catalyst of example 2, in not calcined form, has been activated with a silylation procedure described as following: 2.0 of the solid was outgassed in vacuum (10⁻³ torr) at 100 °C during 2 hours. Then, the sample was cooled and 1.88 g. of hexamethyldisilazane in 30 g. of toluene solution were added under Argon. The resulting mixture was refluxed at 120 °C during 90 minutes under inert atmosphere, and then the silylated sample was filtered and washed with toluene.

The obtained sililated Ti-MSA shows the textural properties reported in the following Tab. 3.

### EXAMPLE 6 ( silylated Ti-MSA )

In this example the catalyst of example 3, in not calcinated form, has been activated with a silylation procedure as described in example 5. The obtained silylated Ti-MSA shows the textural properties reported in the following Tab. 3.

### EXAMPLE 7 ( silylated Ti-MSA )

In this example the catalyst of example 4, in not calcinated form, has been activated with a silylation procedure as described in example 5. The obtained silylated Ti-MSA shows the textural properties reported in the following Tab. 3.

**Table 3**

| Catalyst | Si / Ti | SSA (m2/gr) | Vpore (ml/g) | Pore width (nm) | C content (%wt.) |
|---|---|---|---|---|---|
| EXAMPLE 5 | 21 | 578.7 | 0.43 | 2.3 | 5.313 |
| EXAMPLE 6 | 38 | 576.3 | 0.47 | 2.4 | 5.756 |
| EXAMPLE 7 | 114 | 526.9 | 0.51 | 3.5 | 5.591 |

### EXAMPLE 8

In this example the test with the catalyst of example 1 is described. The same procedure is applied in the following examples, except when specified.

The test was carried out in a 25-50 ml. roundbottom flask immersed in a thermostated bath and equipped with a condenser, thermometer and a magnetic stirrer. A mixture of 0.2g. of terbutilhydroperoxide (TBHP) with 10g. of hydrocarbon solution (containing a mixture of model organic sulphur compounds) and 0.075 g. of n-decane as internal standard was homogenised in the flask under stirring and heating at constant temperature (80°C). Then, 0.2g of catalyst were added at once to the reaction mixture (time zero). Small aliquots were carefully withdrawn from the mixture at time intervals to follow the kinetic of the reaction. The reaction products were analysed by gas chromatography in a Varian 3400 GC equipped with a capillary column (5% methyl-phenylsilicone, 25 m. length) and a FID. Product identification was performed by GC-MS and available standard compounds.

In Table 4 the model feed components are reported:

**Table 4**

| | Component | %w/w in the mixture | S in the mixture (ppm) |
|---|---|---|---|
| **Hydrocarbons** | Aromatics | 20 | - |
| | Olefins | 12 | |
| | Parafins | 68 | - |
| **Sulphur Compounds** | Thiophene | | 60 |
| | 2 Methyl-thiophene | | 60 |
| | Di-methyl-thiophene | | 30 |
| | Benzothiophene | | 60 |

The catalytic results are reported in the following table 5.

### EXAMPLE 9 (comparative)

In this example the test performed with the catalyst of example 1 is reported, following the procedure of example 8 a part for the oxidant chosen that is H₂O₂. Results are reported in Table 5.

### EXAMPLE 10

In this example the test performed with the catalyst of example 4 is reported, following the procedure of example 8. Results are reported in the following Table 5 :

**Table 5**

| Components | S content | S Conversion % EX.8 | S Conversion % EX.9 (comparative) | S Conversion % EX.10 |
|---|---|---|---|---|
| Thiophene | 60 ppm | 11 | 3 | 10 |
| 2-Me-Thioph. | 60 ppm | 24 | 2 | 18 |
| Di-Me-Thioph. | 30 ppm | 59 | 3 | 31 |
| Benzothiophene | 60 ppm | 99 | 10 | 92 |
| S Total ( ppm) | 210 ppm | 111 ppm | 200 ppm | 129 ppm |

### EXAMPLE 11

The tests were performed with the catalyst of example 4, following the procedure of example 8, with the feed of Table 6. The tests were performed changing the amount of catalyst. Results are reported in Table 7, where the different catalyst amount are reported.

**Table 6**

| | Component | %w/w in the mixture | S in the mixture (ppm) |
|---|---|---|---|
| **Hydrocarbons** | Aromatics | 20.00 | - |
| | Parafins | 79.98 | - |
| **Sulphur Compounds** | Benzothiophene | | 80 |
| | Methyl-Benzothiophene | | 60 |
| | DiBenzothiophene | | 60 |

### EXAMPLE 12

In this example the tests performed with the catalysts of example 7 are reported, following the procedure of example 11. Results are reported in Table 7:

**TABLE 7**

| | **S** **Ppm** | **S conv. % with** **Cat.ex.4** | | **S conv. % with** **Cat. Ex. 7** | |
|---|---|---|---|---|---|
| | | **0.1** cat. %w | **0.3** cat. %w | **0.1** cat. %w | **0.3** cat. %w |
| BT | 80 | 71.2 | 87.3 | 84.7 | 95.8 |
| Me-BT | 60 | 80.1 | 91.8 | 92.4 | 98.3 |
| DBT | 60 | 100.0 | 100.0 | 100.0 | 100.0 |
| S (ppm) | 200 | 83.8 (32 ppm) | 93.0 (14 ppm) | 92.4 (15 ppm) | 98.0 (4 ppm) |

### EXAMPLE 13

In this example the tests performed with the catalysts of examples 2 and 5 are reported, following the procedure of example 11. Results are reported in Table 8:

**Table 8**

| | **S** **ppm** | **S conv. % with Cat.** **EX. 2** | | **S conv. % with Cat.** **EX. 5** | |
|---|---|---|---|---|---|
| | | **0.1** cat. %w | **0.3** cat. %w | **0.1** cat. %w | **0.3** cat. %w |
| BT | 80 | 65.1 | 95.6 | 85.5 | 99.0 |
| Me-BT | 60 | 71.1 | 98.6 | 90.9 | 100.0 |
| DBT | 60 | 95.3 | 100.0 | 100.0 | 100.0 |
| S (ppm) | 200 | 77.2 (46 ppm) | 98.1 (4 ppm) | 92.1 (16 ppm) | 99.7 (1 ppm) |

### EXAMPLE 14

In this example the tests performed with the catalysts of examples 3 and 6 are reported, following the procedure of example 8. Results are reported in Table 9:

**Table 9**

| | **S** **ppm** | **S conv. % with cat.** **EX. 3 (Ti-MSA-Cat)** | | **S conv. % with cat.** **EX.6 (Ti-MSA Silylated)** | |
|---|---|---|---|---|---|
| | | **0.1** cat %w | **0.3** cat %w | **0.1** cat %w | **0.3** cat %w |
| BT | 80 | 98.2 | 98.3 | 100.0 | 100.0 |
| Me-BT | 60 | 97.8 | 100.0 | 100.0 | 100.0 |
| DBT | 60 | 100.0 | 100.0 | 100.0 | 100.0 |
| S (ppm) | 200 | 98.7 (3 ppm) | 99.4 (1 ppm) | 100.0 (0 ppm) | 100.0 (0 ppm) |

### EXAMPLE 15

The test were performed with the catalysts of example 2 and 3 and of example 5 and 6 (after silylation procedure) using a real LCO feed, following the procedure as below.

The experiments of oxidation of sulphur containing compounds were carried out in a 25-50 ml. roundbottom flask immersed in a thermostated bath and equipped with a condenser, thermometer and a magnetic stirrer. Typically, a mixture of 0.05g. of TBHP with 15g. of LCO with sulphur containing compounds and 0.075g. of n-decane as internal standard was homogenised in the flask under stirring and heating at constant temperature (80°C). Then, 0.055 of catalyst were added at once to the reaction mixture (time zero). Small aliquots were carefully withdrawn from the mixture at time intervals to follow the kinetic of the reaction. The reaction mixtures were analysed by gas chromatography in a Varian 3400-GC equipped with a Petrocol-100 fused silica column connected to two detectors (FID and PFPD) in parallel at the outlet of the column. Results are reported in table 10.

**Table 10**

| Components | S (ppm) | Conversion | | | |
|---|---|---|---|---|---|
| | | **Ti-MSA** | | **Ti-MSA-Silylated** | |
| | | **Cat EX. 2** | **Cat. EX. 3** | **Cat. EX. 5** | **Cat. EX. 6** |
| DBT | 0 | - | - | - | - |
| Alkyl-DBT's | 18 | 100.0 | 100.0 | 100.0 | 100.0 |
| Di-alkyl-DBT's | 58 | 54.0 | 81.5 | 68.0 | 93.9 |
| Poly-alkyl-DBT's | 164 | 96.0 | 95.2 | 97.4 | 99.3 |
| S ppm | 200 | 87.2 (31ppm) | 92.0 (20ppm) | 91.3 (22ppm) | 97.9 (5ppm) |

## Claims

1. Process for oxidative desulphurization of hydrotreated hydrocarbon mixtures which boil within the range of 180° to 360°C, containing less than 350 ppm of sulphur as thiopenic compounds, which comprises:
a) putting these mixtures in contact, in the presence of an organic peroxide, with a catalytic composition comprising a completely amorphous micro and/or mesoporous mixed oxide containing an oxide matrix selected from silica, alumina, ceria, magnesia and mixtures of thereof, wherein one or more oxidative metal oxides selected from transition metal oxides and group IVA metal oxides are uniformly dispersed, and
b) separing the obtained corresponding sulphur oxygenated products from the hydrocarbon mixture.

2. Process according to claim 1, wherein the surface of the catalytic composition has -O-Si(R)₃ groups, R being the same or different each other and being selected from C₁-C₄ alkyl, aryl and polyaryl groups, that optionally contain functional groups selected from acids, amines, thiols, sulfonics or trialkylamines.

3. Process according to claim 1 or 2 wherein the oxidative dispersed metal oxide is selected from oxide of Ti, V, Zr, Sn and there mixtures.

4. Process according to claim 1 or 2 wherein the catalytic composition contains boron and/or gallium oxides.

5. Process according to claim 1 wherein the molar ratio in catalytic composition between the oxide matrix (YO) selected from silica, alumina, ceria, magnesia and mixtures of thereof, and the dispersed metal oxide (MO) is between 5/1 and 300/1.

6. Process according to claim 5 wherein the molar ratio in catalytic composition between the oxide matrix (YO) and the dispersed metal oxide (MO) is between 10/1 and 200/1.

7. Process according to claim 4 wherein the molar ratio in catalytic composition between the oxide matrix (YO) and the boron or/and gallium oxides is between 5/1 and 300/1.

8. Process according to claim 1 or 2 wherein in the catalytic composition the oxide matrix is selected from silica, alumina and mixture thereof, and the metal oxide is selected from the oxides of titanium, zirconium, vanadium, tin.

9. Process according to claim 8 wherein the metal oxide is oxide of titanium.

10. Process according to claim 1 or 2 wherein the catalytic composition is a completely amorphous micro-mesoporous mixed oxide **characterized by** a surface area of more than 500 m²/g, a pore volume of between 0.3 and 1.3 ml/g, an average pore diameter of less than 40 Å.

11. Process according to claim 10 wherein the catalytic composition is a completely amorphous micro-mesoporous mixed oxides of MSA type whose XRD spectrum from powders does not have a crystalline structure and does not show any peak.

12. Process according to claim 10 wherein the catalytic composition is a completely amorphous micro-mesoporous mixed oxide of ERS-8 type whose XRD spectrum from powders does not have a crystalline structure, does not show any peak and shows a widespread scattering at angular value not greater than 2θ = 5°, with CuKα radiation, while other scattering phenomena coherent for greater angular values are absent.

13. Process according to claim 11 wherein the catalytic composition is a completely amorphous micro-mesoporous mixed oxide consisting of a silica or a silica and alumina matrix wherein one or more metal oxide are uniformly dispersed, these being selected from the oxides of titanium, zirconium, vanadium, tin, **characterized by** a surface area of more than 500 m²/g, a pore volume of between 0.3 and 1.3 ml/g, an average pore diameter of less than 40 Å.

14. Process according to claim 12 wherein the catalytic composition is a completely amorphous micro-mesoporous mixed oxides consisting of a matrix of silica or a matrix of silica and alumina, wherein one or more metal oxides are uniformly dispersed selected from oxides of titanium, zinc, vanadium and tin, **characterized by** a surface area of more than 500 m²/g, a pore volume of between 0.3 and 1.3 ml/g, an average pore diameter of less than 40 Å.

15. Process according to claim 2 wherein in the catalytic composition the molar ratio between the metal oxide matrix and the dispersed metal oxide is higher than 5 and less or equal to 400.

16. Process according to claim 1 o 2 wherein the catalytic composition is used as such or extruded using a binder and a peptizing agent added to the catalyst to produce an estrudable paste.

17. Process according to claim 1 or 2 wherein the organic peroxide is an alkyl- or an aryl-hydroperoxide, or a dialkyl- or diaryl-peroxide, wherein the alkyl or aryl groups are the same or different.

18. Process according to claim 17 wherein the organic peroxide is terbutyl hydroperoxide.

19. Process according to claim 1 or 2 carried out at a temperature ranging from 50 to 120°C, in presence of an organic peroxide with a weight ratio in respect to S ranging from 2 to 15.

20. Process according to claim 19 carried out at atmopheric pressure.

21. Process according to claim 1 or 2 wherein the hydrotreated hydrocarbon mixture is LCO.

22. Process according to claim 1 or 2 carried out in unique organic phase and in absence of added solvent.

23. Process according to claim 1 or 2 wherein the separation of the obtained sulphur oxygenated products from the hydrotreated hydrocarbon mixtures is carried out by distillation, by solvent extraction methods or by selective adsorption.

24. Process according to claim 23 wherein the solvent extraction methods are carried by extraction with methanol, acetonitrile , dioxane, methyl-terbutyl-ethere.

25. Catalytic composition comprising a completely amorphous micro-mesoporous mixed oxide consisting of a silica and alumina matrix wherein one or more metal oxides are uniformly dispersed, these being selected from the oxides of titanium, zirconium, vanadium, tin, **characterized by** a surface area of more than 500 m²/g, a pore volume of between 0.3 and 1.3 ml/g, an average pore diameter of less than 40 Å, and a XRD spectrum from powders that does not have a crystalline structure and does not show any peak.

26. Catalytic composition comprising a completely amorphous micro-mesoporous mixed oxide consisting of a matrix of silica or a matrix of silica and alumina, wherein one or more metal oxides are uniformly dispersed selected from oxides of titanium, zinc, vanadium and tin, excluding the mixed oxides containing a silica matrix wherein titanium oxide is uniformly dispersed, said catalytic composition being **characterized by** an X-ray difraction spectrum (XRD) that does not have a crystalline structure, has a widespread reflection at angular value not greater than 2θ = 5°, with CuKα radiation, while other scattering phenomena coherent for greater angular values are absent.

27. Catalytic composition comprising a completely amorphous micro-mesoporous mixed oxide containing an oxide matrix selected from silica, alumina, ceria, magnesia and mixtures of thereof, wherein one or more metal oxides selected from oxides of Ti, V, Zr, Sn, are uniformly dispersed, excluding the mixed oxide of MSA type containing a silica matrix wherein one or more metal oxides are uniformly dispersed selected from the oxides of titanium, zirconium, vanadium, tin and excluding the mixed oxide of ERS-8 type containing a silica matrix wherein titanium oxide is uniformly dispersed.

28. Catalytic composition comprising a completely amorphous micro and/or mesoporous mixed oxides containing a matrix selected from silica, alumina, ceria, magnesia and mixtures of thereof, wherein one or more metal oxides selected from transition metal oxides and group IVA metal oxides are uniformly dispersed, whose surface has -O-Si(R)₃ groups, R being the same or different each other and being selected from C₁-C₄ alkyl, aryl and polyaryl groups, that optionally contain functional groups selected from acids, amines, thiols, sulfonics or trialkylamines.

29. Catalytic composition according to claim 28 wherein the oxidative dispersed metal oxide is selected from oxide of Ti, V, Zr, Sn and there mixtures.

30. Catalytic composition according to claim 25, 26, 27 or 28 wherein the catalytic composition contain boron and/or gallium oxides.

31. Catalytic composition according to claim 28 wherein the molar ratio in catalytic composition between the oxide matrix and the oxidative dispersed metal oxide is higher than 5 and less or equal to 400.

32. Catalytic composition according to claim 28 wherein in the catalytic composition the metal oxide matrix is selected from silica, alumina and mixture thereof, and the metal oxide is selected from the oxides of titanium, zirconium, vanadium, tin.

33. Catalytic composition according to claim 32 wherein the metal oxide is oxide of titanium.

34. Catalytic composition according to claim 28 comprising a completely amorphous micro-mesoporous mixed oxide **characterized by** a surface area of more than 500 m²/g, a pore volume of between 0.3 and 1.3 ml/g, an average pore diameter of less than 40 Å, whose XRD spectrum from powders does not have a crystalline structure and does not show any peak.

35. Catalytic composition according to claim 28 comprising a completely amorphous micro-mesoporous mixed oxide **characterized by** a surface area of more than 500 m²/g, a pore volume of between 0.3 and 1.3 ml/g, an average pore diameter of less than 40 Å, whose XRD spectrum from powders does not have a crystalline structure, does not show any peak and shows a widespread scattering at angular value not greater than 2θ = 5°, with CuKα radiation, while other scattering phenomena coherent for greater angular values are absent.

36. Process for preparing the catalytic composition of claim 34 comprising :
(a) subjecting to hydrolysis and gelification a solution of one or more soluble or hydrolizable compounds of Si and Al, in alcohol, with an aqueous solution of a hydroxide of tetra-alkylammonium having the formula (I):
R' ₄N-OH
wherein R' represents a C₃-C₇ alkyl group and of one or more soluble or hydrolizable compounds of one or more metals selected from Ti, V, Zr, Sn, the quantity of the constituents of the above solution being such as to respect the following molar ratios:
alcohol/YO = 5-20
R'₄N-OH/YO = 0.05-0.5;
H₂O/YO = 5-30
YO/MO ≥ 5 whereas the ratio H20/R'₄N⁺ varies according to the number of carbon atoms in the R' alkyl chain , in accordance with the values shown in table A below :
**Table A**
| R' | H₂O/R'₄N⁺ |
|---|---|
| Hexyl | > 133 |
| Pentyl | > 100 |
| Butyl | > 73 |
| Propyl | > 53 |
operating at a temperature close to the boiling point, at atmospheric pressure, of the alcohol used and of any alcohol which develops as by-product of the above hydrolysis reaction, without the elimination or substantial elimination of said alcohols from the reaction environment, preferably at a temperature of between 20°C and 80°C;
(b) subjecting the gel obtained in step (a) to drying;
(c) outgassing the obtained material in vacuum and then adding a solution of silylating agent in solvent under inert gas;
(d) refluxing the resulting mixture under inert atmosphere and then filtering the obtained product, washing and subjecting it to drying.

37. Process for preparing the catalytic composition of claim 35 comprising :
(a) subjecting to hydrolysis and gelification a solution of one or more soluble or hydrolizable compounds of Si and Al, in alcohol, with an aqueous solution of a hydroxide of tetra-alkylammonium having the formula (I):
R' ₄N-OH
wherein R' represents a C₃-C₇ alkyl group and of one or more soluble or hydrolizable compounds of one or more metals selected from Ti, V, Zr, Sn, the quantity of the constituents of the above solution being such as to respect the following molar ratios:
alcohol/YO = 5-20
R'₄N-OH/YO = 0.05-0.5;
H₂O/YO = 5-30
YO/MO ≥ 0.1 whereas the ratio H2O/R'₄N⁺ varies according to the number of carbon atoms in the R' alkyl chain , in accordance with the values shown in table B below :
**Table B**
| R' | H₂O/R'₄N⁺ |
|---|---|
| Hexyl | ≤ 133 |
| Pentyl | ≤ 100 |
| Butyl | ≤ 73 |
| Propyl | ≤ 53 |
operating at a temperature close to the boiling point, at atmospheric pressure, of the alcohol used and of any alcohol which develops as by-product of the above hydrolysis reaction, without the elimination or substantial elimination of said alcohols from the reaction environment, preferably at a temperature of between 20°C and 80°C;
(b) subjecting the gel obtained in step (a) to drying;
(c) the obtained material is outgassed in vacuum and then a solution of silylating agent in solvent was added under inert gas;
(d) refluxing the resulting mixture under inert atmosphere and then filtering the obtained product, washing and subjecting it to drying.

38. Process according to claim 36 or 37 wherein the silylating agent is hexaalkyldisilazane or hesaaryldisilazane wherein the alkyl or aryl groups of the disilazane are selected from C₁-C₄ alkyl, phenyl and polyaryl groups, that optionally contain functional groups selected from acids, amines, thiols, sulfonics or trialkylamines.
